Europäisches Patentamt

(19) European Patent Office

Office européen des brevets

(11) Publication number: **0 198 626 B1**

# EUROPEAN PATENT SPECIFICATION

(12)

(45) Date of publication of the patent specification:
**19.07.89**

(51) Int. Cl.⁴: **B29D 30/00, B29D 30/02**

(21) Application number: **86302374.3**

(22) Date of filing: **01.04.86**

(54) **Tyre constructional method.**

(30) Priority: **10.04.85 GB 8509154**

(43) Date of publication of application:
**22.10.86 Bulletin 86/43**

(45) Publication of the grant of the patent:
**19.07.89 Bulletin 89/29**

(84) Designated Contracting States:
**AT BE CH DE FR GB IT LI LU NL SE**

(56) References cited:
**FR-A- 2 462 280**
**GB-A- 1 365 341**
**GB-A- 2 047 637**
**GB-A- 2 047 637**
**US-A- 3 348 597**

(73) Proprietor: **Watts Industrial Tyres Limited, Church Road, Lydney Gloucestershire GL15 5EN(GB)**

(72) Inventor: **White, Lewis William, "Treetops" Lydney Road, Yorkley Gloucestershire(GB)**

(74) Representative: **Corfield, Peter Ralph et al, A. R. Davies & Co. 27, Imperial Square, Cheltenham, Glos. GL50 1RQ(GB)**

## Description

This invention relates to solid tyres for vehicles. The expression solid tyres is to be taken to mean tyres which do not have internal spaces in which air under pressure is maintained. The invention is primarily concerned with solid tyres for vehicles such as fork-lift trucks, cranes, or other mechanical handling equipment or other vehicles not generally used on highways.

The advantages of solid tyres are well known in that they do not need to have air under pressure and are thus free from maintenance. This is particularly significant in factory or other environments where objects liable to damage the tyres may be present.

Many solid tyres are made from natural or synthetic rubbers, with or without fabric or fibre reinforcements. However, it is common knowledge that tyres of these materials tend to mark floors and in situations such as hospitals and the food industry this is undesirable. The use of plastics can overcome this problem, but many plastics which have acceptable non-marking properties, though reasonably hard wearing, tend to be too hard or stiff and softer ones wear relatively quickly.

It is the primary object of the invention to provide a method of manufacturing a solid tyre which is particularly efficient and reliable in use and can be efficiently produced.

In accordance with one aspect of the present invention, there is provided a method of manufacturing a solid tyre from plastics materials including the steps of forming an inner core of a relatively soft resilient plastics material, then placing the inner core in a mould having the shape of the finished tyre, the inner core being located within the mould so that, when the mould is filled with a resilient relatively hard wearing plastics material, an outer casing is formed around the core, the outer casing having at least an outer peripheral wall and side walls, characterised in that the outer casing includes bead portions for engagement with beads on a wheel rim and a stiff bridge portion between the bead portions and in that reinforcement is placed in the mould prior to moulding of the outer casing for incorporation therein, such reinforcement being at least in the region of the bead and bridge portions of the outer casing.

Such a method of manufacturing a solid tyre as indicated in the pre-characterising part of claim 1 is known from GB-A 2 047 637. The reinforcement may be metal or other material mesh, having holes through which the material of the outer casing can penetrate as the mould is filled.

Preferably, the inner core includes an annular tubular membrane, within which the relatively soft resilient material is contained. The membrane 11 may be formed as a tube with a peripheral joint which is secured before introduction of the relatively soft resilient material under pressure.

Preferably, also, keying means are placed on the exterior surface of the membrane for engagement with the outer casing as it is moulded around the membrane. The keying means may be grooves or other indentations of projections on the external surface of the membrane.

Preferably, the plastics material used for the inner core is a polyurethane. Desirably, the hardness is in the range 10 to 60 Shore "A" Durometer and the elongation is in the range 200 to 400%.

Advantageously, the plastics material used for the outer casing is a polyurethane. Desirably, the hardness is in the range 60 to 90 Shore "A" Durometer, and the elongation is in the range 400 to 800%.

The mould in which the outer casing is formed may have placing means for supporting the inner core away from the sides of the mould, so that upon filling with the material for the outer casing, the inner core is at least partially enclosed in that material.

Gravity casting, injection casting, centrifugal casting or reaction injection moulding methods may be employed in making the inner core.

Gravity casting, centrifugal casting, reaction injection moulding methods may be employed in making the outer casing.

It is a further object of the invention to provide a tyre for the purposes mentioned, which is hard wearing, has a good performance and has a long working life.

According to a second aspect of the invention, there is provided a solid tyre comprising an inner core of a relatively soft resilient plastics material and an outer casing of a relatively hard wearing plastics material moulded around the inner core, the said outer casing having at least an outer peripheral wall and side walls, characterised in that the outer casing includes bead portions for engagement with beads on a wheel rim and a stiff bridge portion between the bead portions, and in that reinforcement is incorporated in the outer casing, such reinforcement being at least in the region of the bead and bridge portions of the outer casing.

Varying hardness and flexibility in differing parts of the tyre outer casing may be achieved by using materials of different properties.

The invention will now be described by way of example with reference to the accompanying drawings, in which:

Figure 1 is a cross-sectional view of a finished tyre produced in accordance with the invention;

Figure 2 is a part cross-sectional view of a moulding forming a membrane for surrounding the inner core of the tyre of figure 1;

Figure 3 is a plan view showing a mould for producing a finished tyre in accordance with the invention;

Figure 4 is a cross-sectional view of the mould of Figure 3;

Figure 5 is a plan view of a mould for producing the inner core by an alternative method, and

Figure 6 is a cross-sectional view of the mould shown in Figure 5.

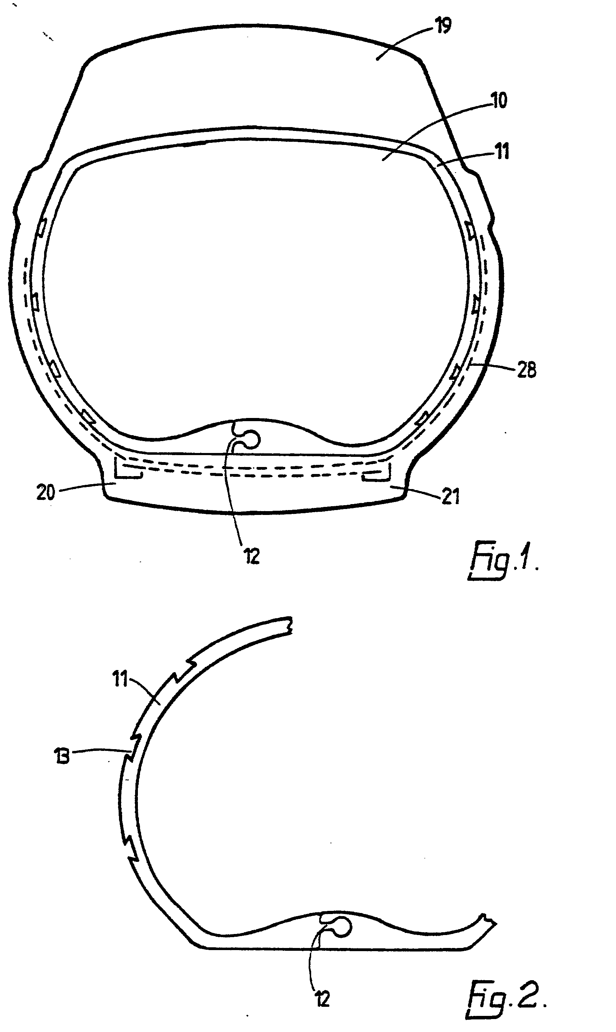

The tyre illustrated in Figure 1 is intended for use on a wheel having a recessed rim of conventional kind, the rim however being of the split type, including two, three or four components, to enable the tyre to be fitted. For certain sizes there may be sufficient resilience in the tyre to enable the tyre to be fitted without separatioin of the rim parts or with partial separation only. The tyre is typically for use on trucks or other vehicles not primarily intended for use on highways but in which tyre wear must be minimised and in which risk of puncture is eliminated. The tyre will have low rolling resistance and may be used on floors on which it will not leave a mark. The tyre is also resistant to oil, chemicals and solvents.

As seen in Figure 1 the tyre comprises an inner core 10 of generally circular section.

The inner core includes and is an enclosing annular, tubular membrane 11, also shown in Figure 2. This membrane 11 is formed from a resilient material such as a suitable moulded polymer. The membrane 11 is preferably a multi-layer or multi-ply structure. It has a relatively thin wall section, but at the base of the tyre section it is thickened and includes a separable joint 12 made up of a bead and groove combination, the resilience of the material allowing these to be engaged when required. On the external surface of the membrane 11 are re-entrant or dovetail grooves 13, forming keying means.

The inner core is formed by first moulding the membrane, preferably by a low pressure moulding process, then after removing this from its mould, the joint 12 is engaged, thus forming a hollow annular tube. The material for the core 10 is next introduced, through a suitable entry hole, with this being introduced under pressure. Pressurisation provides some degree of prestress within the core.

The inner core 10 is produced from a relatively soft resilient material which may be a urethane or other equivalent plastics material.

A suitable material is polyurethane being in one example a quasi-prepolymer based on a toluene diisocyanate, a mixture of low molecular weight polyols with some oil extension.

In this particular example, the polyurethane mixture was pre-blended in the ratio 1:1 by volume. However, other ratios can be used. This was introduced into the interior of the membrane 11 at 30°C. After filling and plugging, the assembly is then heated or may be transferred to a circulating air oven operating at 35 to 40°C. The curing of the inner core can take place in these conditions over 48 hours.

The physical properties of the inner core in this example were as follows:

Hardness - Shore "A" + 28A

Elongation - = 380%

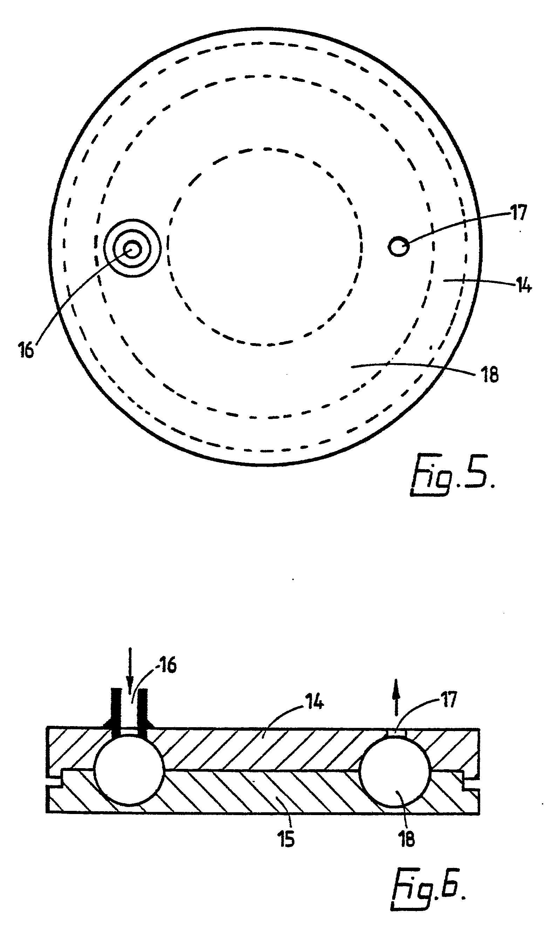

In an alternative arrangement, the inner core may be moulded in a two-part mould 14, 15 such as that shown in Figures 5 and 6 in which the material in liquid form is introduced through an entry port 16, air being allowed to escape through an outlet 17 from an internal generally circular section cavity 18. In place of the membrane the inner core 10 may, in this case, be enclosed in a fabric covering.

This is in the form of a band of fabric applied to the outside of the inner core 10 by winding at 45°. A band 2¼" wide and of plain weave polyester fabric may be suitable. Wire mesh may be substituted for the fabric band. Such a band is shown diagrammatically in Figure 4 at 29.

An outer casing 19 is made from a resilient relatively hard wearing plastics material which is also a urethane material. This material is therefore substantially harder than that used for the inner core 10. This outer casing 19 has a profile corresponding to that of a conventional tyre, having bead portions 20, 21 engageable with beads on the wheel rim. Tread formations (not shown) may be provided, if required on the external surfaces.

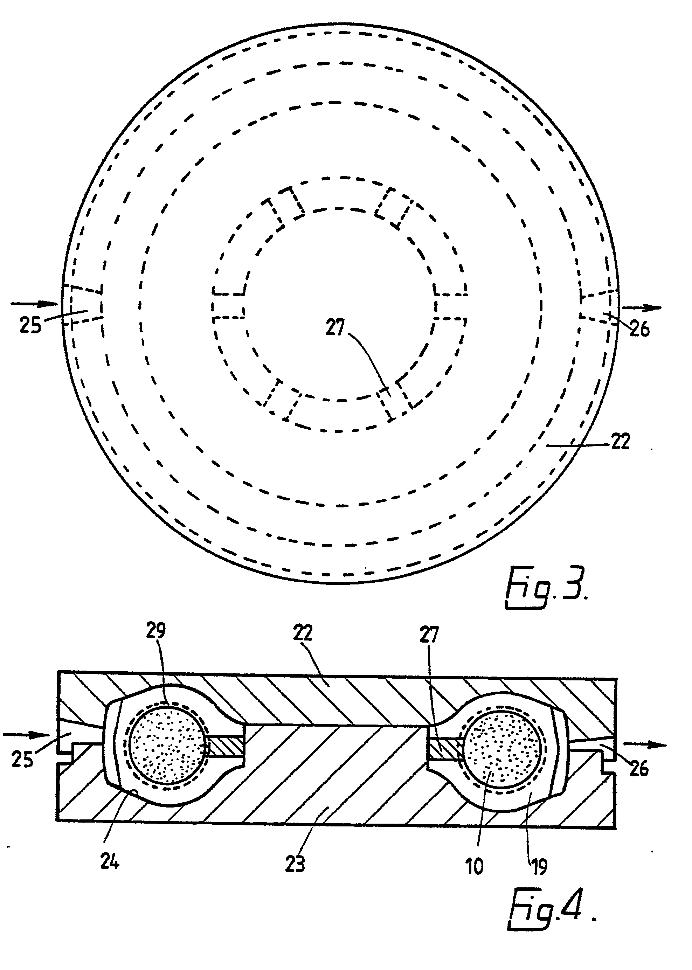

The outer casing 19 is formed in a mould shown in Figures 3 and 4. This is a circular two part mould comprising components 22, 23. A cavity 24 is defined within the mould, being the shape of the finished tyre. At one side an entry port 25 and at the diametrically opposite side an outlet port 26 are provided.

The inner core is supported within the cavity 24 by means of spacers 27. These are positioned at intervals around the mould, six being shown at the internal peripheral surface of the cavity 24. When the inner core has been supported in the cavity on the spacers, the remaining volume is filled to form the outer casing.

In this example the mould is placed in a circulating air oven at 100°C. A polyurethane composition based on a toluene diisochanate/polytetramethylene ether glycol prepolymer crosslinked with 44' melthylene bis ortho chlorinaline can be used.

Curing takes place at 100°C over a period of a predetermined period. After cooling the finished moulding is removed and any flash trimmed off.

The physical properties of the outer casing 19 are as follows:

Hardness - Shore "A" = 80 A

Elongation = 800%

In the example shown in Figure 1 reinforcement 28 is included within the outer casing 19. This may be in the form of wires or other metal strips or sections of metal or other material mesh. The reinforcement 28 is provided in the bead portions 20, 21 and also the section between the bead portions, the latter providing a stiff bridge which greatly strengthens the tyre in this area. It also serves to tend to prevent the tyre from slipping on the wheel. The reinforcement 28 is placed in the mould prior to moulding the outer casing. As the material enters the mould it flows through holes in the mesh or other spaces between portions of the reinforcement.

Varying hardness of the portions of the outer casing can be achieved by selection of different material mixes for producing the portions comprising the bead portions, sidewall portions and tread portion but the desired flexibility may be achieved by suitable variation of thickness or combination of these techniques.

Reinforcements in the form of wire or fabric mesh are embedded in the outer casing and provide varying strengths over different areas of the tyre, so as to provide greater or lesser flexibility as required.

A tread pattern may be provided if required on the outer peripheral face and/or on parts of the side walls.

Instead of the gravity casting methods described, centrifugal casting, injection casting, reaction injection moulding or other appropriate method may be used for the formation of the inner core. Similarly centrifugal casting, reaction injection moulding may be used to make the outer casing. The materials chosen may determine or influence the choice of technique used for production.

Other materials for the inner core include polyurethanes of the prepolymer, quasi prepolymer or one shot polymer types. Materials suitable for the outer casing include any of those suitable for the inner core as well as thermoplastic grades which can be used in centrifugal casting or blow moulding.

In certain cases, including the example shown in Figure 1, the outer casing entirely surrounds the inner core but in other examples, the inner core may be exposed at the bead area, where it is protected by the wheel when the tyre is in place.

## Claims

1. A method of manufacturing a solid tyre from plastics materials including the steps of forming an inner core (10) of a relatively soft resilient plastics material, the placing the inner core (10) in a mould (22, 23) having the shape of the finished tyre, the inner core (10) being located within the mould (22, 23) so that, when the mould is filled with a resilient relatively hard wearing plastics material, an outer casing (19) is formed around the core (10), the outer casing (19) having at least an outer peripheral wall and side walls, characterised in that the outer casing (19) includes bead portions (20, 21) for engagement with beads on a wheel rim and a stiff bridge portion between the bead portions (20, 21), and in that reinforcement (28) is placed in the mould (22, 23) prior to moulding of the outer casing (19) for incorporation therein, such reinforcement (28) being at least in the region of the bead and bridge portions of the outer casing (19).

2. A method as claimed in claim 1, characterised in that the inner core includes an annular tubular membrane (11), within which the relatively soft resilient material (10) is contained, and in that the membrane (11) is formed as a tube with a peripheral joint (12) which is secured before introduction of the relatively soft resilient material (10) under pressure.

3. A method as claimed in claim 2, characterised in that keying means (13) are placed on the exterior surface of the membrane (11) for engagement with the outer casing (19) as it is moulded around the membrane (11).

4. A method as claimed in any one of the preceding claims, characterised by placing means (27) for supporting the inner core (10) away from the sides of the mould (22, 23), so that upon filling with the material for the outer casing (19), the inner core (10) is at least partially enclosed in that material.

5. A method as claimed in any one of the preceding claims, characterised in that gravity casting, injection casting, centrifugal casting or reaction injection moulding methods are employed in making the inner core (10).

6. A method as claimed in any one of the preceding claims, characterised in that gravity casting, centrifugal casting, reaction injection moulding methods are employed in making the outer casing (19).

7. A method as claimed in any one of the preceding claims, characterised in that the plastics materials used for the inner core (10) and the outer casing (19) are polyurethanes.

8. A solid tyre comprising an inner core (10) of a relatively soft resilient plastics material and an outer casing (19) of a relatively hard wearing plastics material moulded around the inner core (10), the said outer casing having at least an outer peripheral wall and side walls, characterised in that the outer casing (19) includes bead portions (20, 21) for engagement with beads on a wheel rim and a stiff bridge portion between the bead portions, and in that reinforcement (28) is incorporated in the outer casing (19), such reinforcement (28) being at least in the region of the bead and bridge portions of the outer casing (19).

9. A solid tyre as claimed in claim 8, characterised in that the inner core (10) is surrounded by a membrane formed by a fabric band (29) wound therearound.

10. A solid tyre as claimed in claim 8, characterised in that a tubular membrane (11) encases the inner core (10) to form part of that core, and in that the membrane (11) includes a separable joint (12).

11. A solid tyre as claimed in claim 8, 9 or 10, characterised in that the plastics material used for the inner core (10) has a hardness in the range 10–60 Shore "A" Durometer and the elongation is in the range of 200–400%.

12. A solid tyre as claimed in claim 8, 9, 10 or 11, characterised in that the plastics material used for the outer casing (19) has a hardness in the range 60–90 Shore "A" Durometer and the elongation is in the range 400–800%.

13. A solid tyre as claimed in any one of claims 8 to 12, characterised in that the plastics materials of which the inner core (10) and outer casing (19) are formed are polyurethanes.

## Patentansprüche

1. Verfahren zum Herstellen eines Vollreifens aus Kunststoffmaterialien, beinhaltend die Schritte Herstellen eines inneren Kerns (10) aus relativ weichem, elastischem Kunststoffmaterial, dann Einbringen des inneren Kerns (10) in eine Form (22, 23), welche die Gestalt des fertigen Reifens hat, wobei der innere Kern (10) in der Form (22, 23) so angeordnet wird, daß, wenn die Form mit einem elastischen, relativ harten Verschleißkunststoffmaterial gefüllt wird, eine äußere Decke (19) um den Kern (10) hergestellt wird, wobei die äußere Decke (19) wenigstens eine äußere Umfangswand und Seitenwände hat, dadurch gekennzeichnet, daß die äußere Decke (19) Wulstteile (20, 21) zum Eingriff mit Wülsten an einer Felge und einen steifen Brückenteil zwischen den Wulstteilen (20, 21) aufweist und daß eine Verstärkung (28) in die Form (22, 23) eingebracht wird, bevor die äußere Decke (19) geformt wird, um in dieser aufgenommen zu werden, wobei die Verstärkung (28) sich wenigstens in dem Gebiet der Wulstteile und des Brückenteils der äußeren Decke (19) befindet.

2. Verfahren nach Anspruch 1, dadurch gekennzeichnet, daß der innere Kern eine ringförmige Membran (11) aufweist, in welcher das relativ weiche, elastische Material (10) enthalten ist, und daß die Membran (11) als ein Schlauch ausgebildet ist, der mit einer Umfangsverbindungsstelle (12) versehen ist, die geschlossen wird, bevor das relativ weiche, elastische Material (10) unter Druck eingefüllt wird.

3. Verfahren nach Anspruch 2, dadurch gekennzeichnet, daß Verkeilungseinrichtungen (13) an der äußeren Oberfläche der Membran (11) zum Eingriff mit der äußeren Decke (19), wenn diese um die Membran (11) geformt wird, vorgesehen sind.

4. Verfahren nach einem der vorhergehenden Ansprüche, gekennzeichnet durch Vorsehen von Einrichtungen (27) zum Weghalten des inneren Kerns (10) von den Seiten der Form (22, 23), so daß nach dem Füllen mit dem Material für die äußere Decke (19) der innere Kern (10) wenigstens teilweise in dieses Material eingeschlossen ist.

5. Verfahren nach einem der vorhergehenden Ansprüche, dadurch gekennzeichnet, daß Standguß-, Spritzguß-, Schleuderguß- oder Reaktionsspritzgußverfahren beim Herstellen des inneren Kerns (10) benutzt werden.

6. Verfahren nach einem der vorhergehenden Ansprüche, dadurch gekennzeichnet, daß Standguß-, Schleuderguß-, Reaktionsspritzgußverfahren beim Herstellen der äußeren Decke (19) benutzt werden.

7. Verfahren nach einem der vorhergehenden Ansprüche, dadurch gekennzeichet, daß die Kunststoffmaterialien, die für den inneren Kern (10) und die äußere Decke (19) benutzt werden, Polyurethane sind.

8. Vollreifen mit einem inneren Kern (10) aus einem relativ weichen, elastischen Kunststoffmaterial und mit einer äußeren Decke (19) aus einem relativ harten Verschleißkunststoffmaterial, welche um den inneren Kern (10) geformt ist, wobei die äußere Decke wenigstens eine äußere Umfangswand und Seitenwände hat, dadurch gekennzeichnet, daß die äußere Decke (19) Wulstteile (20, 21) zum Eingriff mit Wülsten an einer Felge und einen steifen Brückenteil zwischen den Wulstteilen aufweist und daß eine Verstärkung (28) in der äußeren Decke (19) vorgesehen ist, wobei die Verstärkung (28) wenigstens in dem Gebiet der Wulstteile und des Brückenteils der äußeren Decke (19) vorgesehen ist.

9. Vollreifen nach Anspruch 8, dadurch gekennzeichnet, daß der innere Kern (10) von einer Membran umgeben ist, die aus einem Gewebeband (29) gebildet ist, welches um ihn herumgewickelt ist.

10. Vollreifen nach Anspruch 8, dadurch gekennzeichnet, daß eine rohrförmige Membran (11) den inneren Kern (10) umschließt und einen Teil dieses Kerns bildet und daß die Membran (11) eine trennbare Verbindungsstelle (12) aufweist.

11. Vollreifen nach Anspruch 8, 9 oder 10, dadurch gekennzeichnet, daß das Kunststoffmaterial, das für den inneren Kern (10) benutzt wird, eine Shore-A-Härte im Bereich 10–60 hat und daß die Dehnung in dem Bereich von 200–400% liegt.

12. Vollreifen nach Anspruch 8, 9, 10 oder 11, dadurch gekennzeichnet, daß das Kunststoffmaterial, das für die äußere Decke (19) benutzt wird, eine Shore-A-Härte im Bereich 60–90 hat und daß die Dehnung im Bereich 400–800% liegt.

13. Vollreifen nach einem der Ansprüche 8 bis 12, dadurch gekennzeichnet, daß die Kunststoffmaterialien, aus denen der innere Kern (10) und die äußere Decke (19) hergestellt werden, Polyurethane sind.

**Revendications**

Procédé de fabrication d'un bandage plein à partir de matières plastiques comprenant les étapes consistant à façonner un noyau intérieur (10) dans une matière plastique résiliante relativement molle, puis à placer le noyau intérieur (10) dans un moule (22, 23) ayant la forme du bandage terminé, le noyau intérieur (10) étant placé dans le moule (22, 23) de telle façon que, lorsque le moule est rempli d'une matière plastique résiliente relativement résistante à l'usure, une gaine extérieure (19) soit formée autour du noyau (10), la gaine extérieure (19) ayant au moins une paroi périphérique extérieure et des parois latérales, caractérisé en ce que la gaine extérieure (19) comprend des portions (20, 21) de talons destinées à se combiner avec des talons sur un rebord de roue et une portion rigide faisant pont entre les portions (20, 21) de talons, et en ce qu'une armature (28) est placée dans le moule (22, 23) avant le moulage de la gaine extérieure (19) pour être incorporée à celle-ci, cette armature (28) étant située au moins dans la zone des portions de talons et formant pont de la gaine extérieure (19).

2. Procédé selon la revendication 1, caractérisé en ce que le noyau intérieur comprend une membrane tubulaire annulaire (11), qui contient la matière plastique résiliente relativement molle (10), et en ce que la membrane (11) a la forme d'un tube avec un joint périphérique (12) qui est assujetti avant introduction sous pression de la matière plastique résiliente relativement molle (10).

3. Procédé selon la revendication 2, caractérisé en ce que des moyens de calage (13) sont ménagés sur la surface extérieure de la membrane (11) destinés à se combiner avec la gaine extérieure (19) lorsqu'elle est moulée autour de la membrane (11).

4. Procédé selon l'une quelconque des revendications précédentes, caractérisé par des moyens de mise en place (27) destinés à maintenir le noyau intérieur (10) à distance des côtés du moule (22, 23), de façon que, lors du remplissage de la gaine extérieure (19) avec la matière plastique, le noyau intérieur (10) soit au moins partiellement enfermé dans ladite matière plastique.

5. Procédé selon l'une quelconque des revendications précédentes, caractérisé en ce que des méthodes de coulée debout, de coulée centrifuge, ou de réaction et moulage par injection sont utilisées pour fabriquer le noyau intérieur (10).

6. Procédé selon l'une quelconque des revendications précédentes, caractérisé en ce que des méthodes de coulée debout, de coulée centrifuge, ou de réaction et moulage par injection sont utilisées pour fabriquer la gaine extérieure (19).

7. Procédé selon l'une quelconque des revendications précédentes, caractérisé en ce que les matières plastiques utilisées pour le noyau intérieur (10) et la gaine extérieure (19) sont des polyuréthanes.

8. Bandage plein comprenant un noyau intérieur (10) en matière plastique résiliente relativement molle et une gaine extérieure (19) en matière plastique relativement résistante à l'usure moulée autour du noyau intérieur (10), ladite gaine extérieure ayant au moins une paroi périphérique extérieure et des parois latérales, caractérisé en ce que la gaine extérieure (19) comprend des portions (20, 21) de talons destinées à se combiner avec des talons sur un rebord de roue et une portion rigide faisant pont entre les portions (20, 21) de talons, et en ce qu'une armature (28) est incorporée dans la gaine extérieure (19), cette armature (28) étant située au moins dans la zone des portions de talons et formant pont de la gaine extérieure (19).

9. Bandage plein selon la revendication 8, caractérisé en ce que le noyau intérieur (10) est entouré d'une membrane formée par une bande (29) de tissu câblé enroulée autour.

10. Bandage plein selon la revendication 8, caractérisé en ce qu'une membrane tubulaire (11) enrobe le noyau intérieur (10) pour former une partie de ce noyau, et en ce que la membrane (11) comprend un joint (12) désolidarisable.

11. Bandage plein selon l'une quelconque des revendications 8, 9 ou 10, caractérisé en ce que la matière plastique utilisée pour le noyau intérieur (10) possède une dureté de 10 à 60 Shore "A" Duromètre et une élongation comprise entre 200 et 400%.

12. Bandage plein selon l'une quelconque des revendications 8, 9, 10 ou 11, caractérisé en ce que la matière plastique utilisée pour la gaine extérieure (19) possède une dureté de 60 à 90 Shore "A" Duromètre et une élongation comprise entre 400 et 800%.

13. Bandage plein selon l'une quelconque des revendications 8 à 12, caractérisé en ce que les matières plastiques dans lesquelles sont fabriqués le noyau intérieur (10) et la gaine extérieure (19) sont des polyuréthanes.

EP 0 198 626 B1

Fig.1.

Fig.2.

*Fig.3.*

*Fig.4.*

Fig.5.

Fig.6.